(19) **Europäisches Patentamt / European Patent Office / Office européen des brevets**

(11) **EP 3 293 890 A1**

(12) **EUROPEAN PATENT APPLICATION**

(43) Date of publication:
14.03.2018  Bulletin 2018/11

(51) Int Cl.:
*H04B 7/08* (2006.01)     *H04B 7/04* (2017.01)

(21) Application number: **16188358.2**

(22) Date of filing: **12.09.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **Intel IP Corporation Santa Clara, CA 95054 (US)**<br><br>(72) Inventors:<br>• **HWANG, Yeong-Sun Yongsun 82041 Oberhaching (DE)** | • **NEUHAUS, Holger 81476 Munich (DE)**<br>• **GUNZELMANN, Bertram 85579 Neubiberg (DE)**<br>• **FECHTEL, Stefan 85604 Zorneding (DE)**<br><br>(74) Representative: **Viering, Jentschura & Partner mbB Patent- und Rechtsanwälte Am Brauhaus 8 01099 Dresden (DE)**<br><br>Remarks:<br>Amended claims in accordance with Rule 137(2) EPC. |

(54) **MOBILE COMMUNICATION DEVICE AND METHOD FOR SELECTING A BEAM DIRECTION FOR AN ANTENNA**

(57)    A mobile communication device is described comprising an antenna which may be set to one of a plurality of main beam directions, an estimator configured to estimate a direction and a speed of a rotational change of the antenna, a determiner configured to determine at least one candidate main beam direction of the plurality of main beam directions by adjusting at least one reference main beam direction by an amount based on the estimated direction and speed and a controller configured to set the antenna to a direction based on the at least one candidate main beam direction.

**FIG 11**

## Description

### Technical Field

Embodiments described herein generally relate to mobile communication devices and methods for selecting a beam direction for an antenna.

### Background

To increase the throughput in cellular communication systems, the usage of millimeter (mm) wave signals for radio transmission is considered. Since millimeter wave signals are typically more vulnerable to propagation loss than radio signals of longer wavelengths, the usage of directional antennas, i.e. beamforming, is considered, which however requires a mechanism to select beam directions. Approaches allowing the efficient usage of beamforming are therefore desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a cellular communication system.
Figure 2 shows a communication arrangement illustrating directional transmission.
Figure 3 shows a communication arrangement illustrating beamforming.
Figure 4 illustrates the change of a direction between a base station and a mobile terminal moving at walking speed.
Figure 5 illustrates an example of a UE rotation and a corresponding change of the best beam direction.
Figure 6 shows an example of the beam-history-based UE rotation estimation.
Figure 7 shows an example beam search set refinement based on a rotation estimate.
Figure 8 shows another way of refining the beam search set based on the rotation estimate given in figure 7.
Figure 9 shows three examples of a preemptive beam adjustment method.
Figure 10 shows a mobile communication device.
Figure 11 shows a flow diagram illustrating a method for selecting a beam direction for an antenna.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

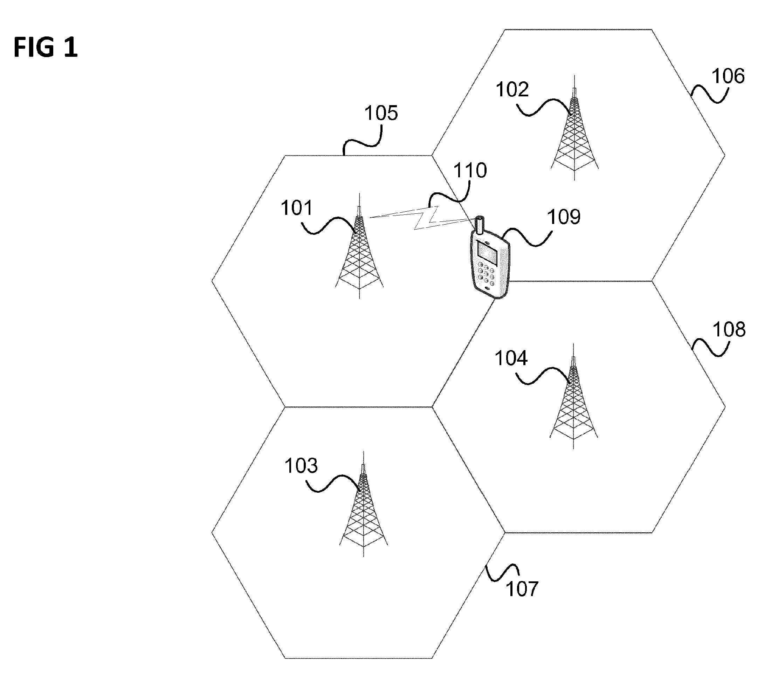

Figure 1 shows a cellular communication system 100.

The cellular communication system includes a radio access network including a plurality of base stations 101-104, wherein each base station 101-104 operates a radio cell 105-108. A communication terminal (i.e. a subscriber terminal) 109 located in one of the radio cells, in this example a first radio cell 105 operated by a first base station 101, may communicate via a radio communication connection 110 with the first base station 101 to exchange data with the radio access network and for getting access to other networks connected to the radio access network, e.g. a core network of the cellular communication system 100 or the Internet.

There are multiple generations of cellular communication systems: 2G such as GSM (Global System for Mobile Communications), 3G such as UMTS (Universal Mobile Telecommunications System) and 4G such as LTE (Long Term Evolution). For fifth generation, 5G, there are concepts considering significant data throughput improvements by the use of millimeter wave spectrum and large bandwidth carriers. The millimeter wave radio resource may be shared between backhaul, front haul and access links. The millimeter wave technology is intended for spectrum with an absolute radio frequency so high that the spectrum range is well suited to offer very large bandwidths. However, the targeted frequency ranges have difficult propagation conditions, mainly caused by high atmospheric attenuation, e.g. absorption by water molecules and gases such as oxygen.

Specifically, the increasing demand for multi-gigabit throughput in Personal Area Networks (PANs), together with the advancements in mm-wave silicon circuit technologies make 60GHz communication a desirable approach, given availability of 7GHz of license free spectrum at these frequencies. Strong attenuation of mm-wave signals actually supports the opportunity of high density multi-user networks, but introduces a challenge for device connectivity across distances above 10m. The latter may be overcome by using directional transmission, thus making the beamforming (BF) approach one of the typical key features of such a system.

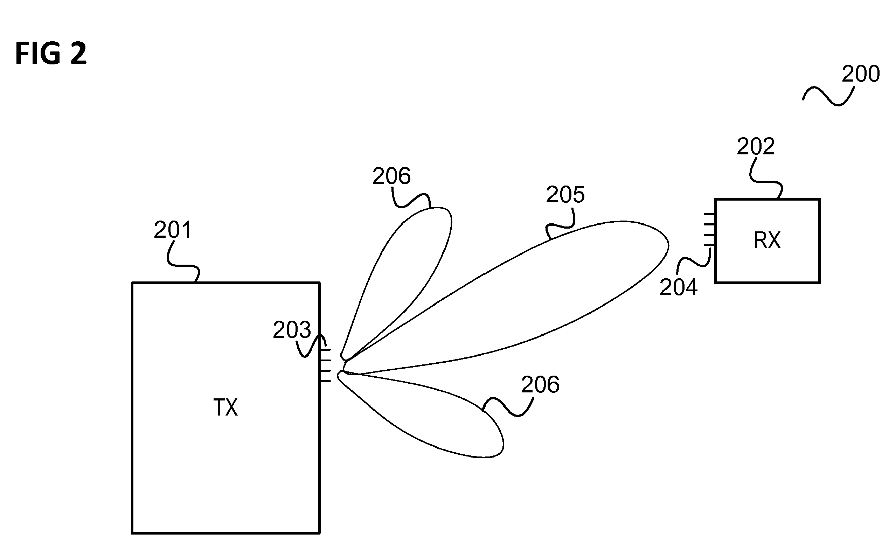

Beamforming is illustrated in Figure 2.

Figure 2 shows a communication arrangement 200.

The communication arrangement 200 includes a transmitter 201 (e.g. corresponding to one of the first base station 101 and the communication terminal 109) and a receiver (e.g. corresponding to the other of the first base station 101 and the communication terminal 109).

The transmitter 201 includes a directional transmit antenna 203 formed of a plurality of antennas (exciter elements) and the receiver 202 includes a directional receive antenna 204 formed of a plurality of antennas (exciter elements). By setting a phase shift between the antennas forming transmit antenna 203, the transmitter 201 may perform beamforming for a transmit signal such that the antenna gain strongly depends on the angle under which the transmitter is seen (in other words the signal strength depends on the angle of departure from the transmitter 201). In this example, the gain is very high for the direction of a main lobe 205 (as represented by its size), medium for the direction of side lobes 206 and very small for all other directions. The main lobe 205 is also referred to as main beam direction. Similarly, the receiver 202 may, by setting a phase shift between the antennas forming the receive antenna 204, perform beamforming to make the receive antenna gain dependent from the angle of arrival of a signal.

By beamforming, high antenna gains can be achieved for certain directions. These high antenna gains allow compensating the additional path loss for millimeter waves but require that, in the example of a direct path (i.e. without reflections) as illustrated in figure 2, the transmitter (TX) angle of departure (AoD) of the main lobe 205 is perfectly matching the desired receiver (Rx) angle of arrival (AoA), i.e. the angle of arrival for which the receive antenna gain is high. In case of an indirect path, i.e. via a reflection at a certain object, the transmitter (TX) angle of departure (AoD) of the main lobe 205 is to match the direction of the object from the transmitter 201 and the desired receiver (Rx) angle of arrival (AoA) is to match the direction from the object to the receiver 202.

To maximize the possible distance between the transmitter 201 and the receiver 202 both have directional antennas 203, 204. For the application to a cellular communication system, this implies that both the base stations 101-104 as well as the subscriber terminals have directional steerable millimeter wave antennas.

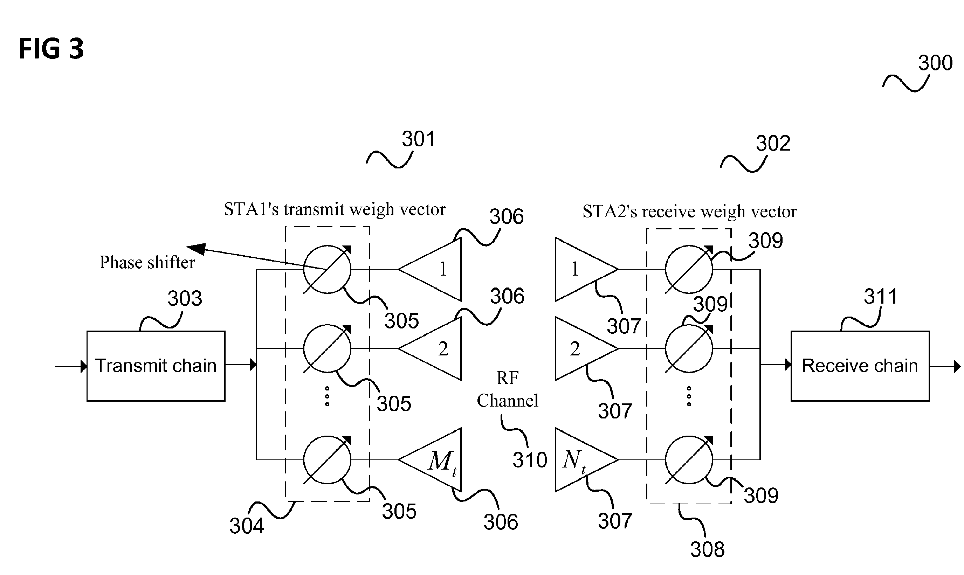

A high gain antenna, such as the transmit antenna 203 and the receive antenna 204, is typically composed of an array of exciter elements and by phase shifting devices and adjustment means for the phase shifts between the exciter elements. The beam (e.g. main lobe 205) can be steered over a certain (angular) range, without mechanical work (by phase shifting). Similarly, the reception pattern of the antenna 204 can be set. This is illustrated in Figure 3.

Figure 3 shows a communication arrangement 300.

The communication arrangement 300 includes a transmitter 301, e.g. corresponding to transmitter 201, and a receiver 302, e.g. corresponding to receiver 202.

The transmitter 301 includes a transmit chain 303 via which data to be transmitted are supplied to a transmitter phase shifter array 304. The phase shifter array 304 includes a phase shifter 305 for each transmit antenna 306 of the transmitter 301. Each phase shifter 305 receives a signal corresponding to the data to be transmitted from the transmit chain 303, shifts its phase according to a respective component of a transmit antenna weight vector (AWV) and supplies the phase-shifted signal to the respective transmit antenna 306. Accordingly, by setting a certain transmit antenna weight vector, a certain radiation pattern, e.g. a certain direction of the main beam (referred to as the transmit beam) of the (overall) antenna formed by the transmit antennas 306 can be set.

Analogously, the receiver includes receive antennas 307 and a receiver phase shifter array 308 including a receiver phase shifter 309 for each receive antenna 307. Each receive antenna 307 receives the (overall) signal transmitted by the transmit antennas via the RF channel 310. The receive phase shifters 309 shift the received signals in accordance with a receive antenna weight vector and the results are combined and fed to a receive chain 311.

Beamforming on the side of a mobile terminal 105, e.g. a UE, brings unique challenges that other beamforming platforms may not need to consider. Particularly, there is the potentially dominant impact of UE rotation on UE beamforming. That is, the best UE beam direction for a communication link may change rapidly, even if there is no moving scatterer in the propagation path and the UE does not move to another location. This may happen because a UE can rotate in any way in the 3-dimensional space. Hence, the preferred UE Tx (transmit) and Rx (receive) beam directions may change very fast.

This UE rotation can be a dominant factor in UE beam selection in a wide range of scenarios. Millimeter wave systems, in which UE beamforming is particularly practical, are often designed for small-cell, low mobility, high data-rate usage. The UEs and scatterers are expected to be of pedestrian speed, and data applications include augmented reality and interactive gaming where, for instance, an otherwise stationary user may rapidly rotate a handheld device.

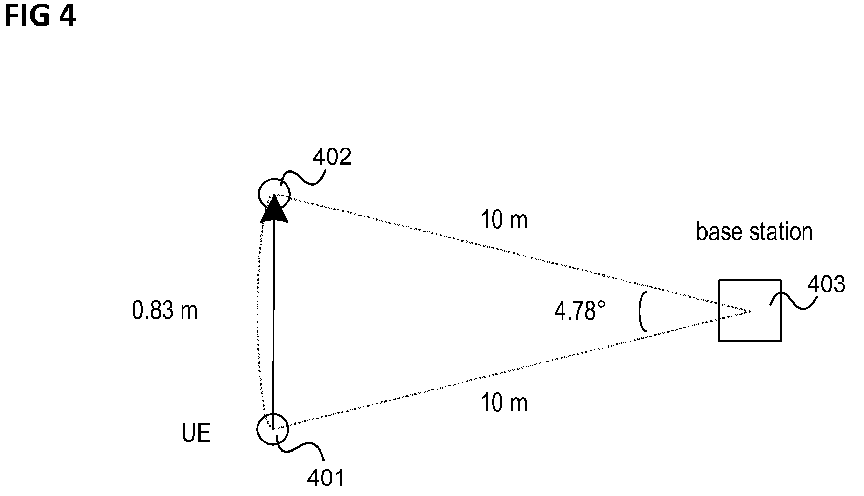

The significance of UE rotation with respect to beamforming is illustrated in figure 4.

Figure 4 shows a pedestrian UE maintaining the same orientation while moving at 3Km/h (0.8333 m in 1 second) from a first location 401 to a second location 402, both of which are 10 meters away from a base station 403, which results in an angular change of the line-of-sight path of 4.78° per second. In contrast, a user running an augmented reality or interactive gaming application can rotate the device by a much faster rate, e.g., 90° per 1/10 second. In addition, the direction and speed of the UE rotation may change rapidly as well. Moreover, subtle and jittery human hand and body movements, often subconscious and involuntary, may become significant for high-performance UEs with fine beam granularity. To provide robust user experience, UE beam selection needs to consider periods of UE rotations whose angular change is significant with respect to beam training intervals.

5G system proposals support beam training intervals in the order of 5 milliseconds, where each training instance may allow testing of a small subset of UE beam directions, often a group in the immediate vicinity of a previously selected direction. For example, a base station, e.g. corresponding to transmitter 201, periodically transmits reference signals to a UE, e.g. corresponding to receiver 202, and the UE performs a beam search procedure (also referred to as beam training procedure) based on the received reference signals. Thus, without considering UE rotation, a trained UE beam is used for the rest of the interval (e.g. 5 milliseconds) until the next training (i.e. the next transmission of beam training reference signals), at which a relatively small angular adjustments may be made. On the other hand, a UE may be prone to quick and large turns in addition to continuous episodes of sudden step-like rotations. A UE rotation of 90° or more in 100 milliseconds are reasonable scenarios for the said high data-rate applications, and continuous jitters may translate to changes in the optimal beam direction in between two beam training instances.

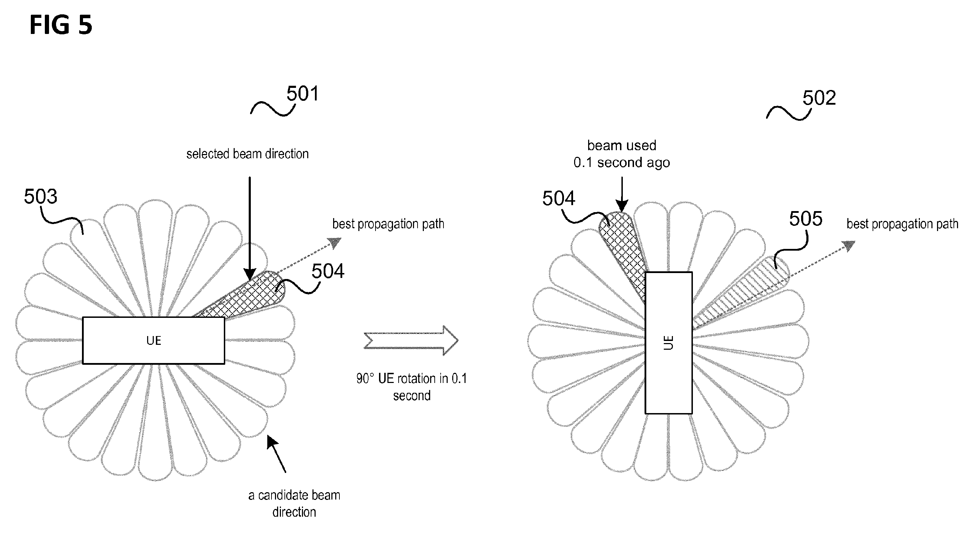

Figure 5 illustrates an example of a UE rotation and a corresponding change of the best beam direction.

In a left representation 501 the UE is shown with a first (horizontal) orientation while in a right representation 502, assumed to arise from a 90° rotation of the UE during 0.1 second, the UE 502 is shown with a second (vertical) orientation.

In both representations, each petal-shape 503 represents a candidate beam.

A first petal 504 corresponds to an optimally selected beam direction at an initial point in time (time of the UE having the first orientation) and a second petal 505 corresponds to the optimal beam after the 90° UE rotation.

To maintain a robust user experience over a wide range of UE beamforming capabilities and UE behaviors, shorter beam training intervals and/or a higher density of reference signals per training may be used to allow testing more beam candidates. However, this amounts to substantial signaling overhead increase.

In the following, approaches are described including UE rotation estimation allowing enhancing UE beam selection and/or reducing beam training overhead. Specifically, based on the estimate of the antenna (array) orientation change over a given period of time, the UE may obtain a prediction of the best beam direction for the next beamforming instance and use it to (1) preemptively switch to another beam direction, and/or (2) update the search pool of candidate beams, thereby reducing the number of candidates for more efficient search or increase the accuracy of beam selection.

The UE may base the rotation estimation, i.e. the estimation of the direction and speed of antenna array rotation on a beam history, for example on the selected beams (i.e. beam directions) at the two or more recent beamforming instances.

When in a training mode, i.e. for a beam training procedure, the UE may for example shift a set of beam directions in the estimated rotation direction by the estimated amount of rotation (e.g. based on the estimated rotation speed). When not in a training mode, i.e. in between two consecutive beam training procedures, the UE may preemptively shift the beam direction according to the estimated rotation.

As two further examples for the application of rotation estimation in beamforming, first, beamforming enhancement may for example also be based on rotation estimation by using motion/orientation sensors to first detect whether there are device rotations, displacement, or blockers. For example, if a blocker is detected, the beams are switched to a back-up set corresponding to the second best channel cluster, obtained from a previous global beam training. If displacement is detected both Tx and Rx beam sweeps are initiated. If rotation is detected, Rx beam training is triggered.

Second, the potential problem of pole-mounted access points (APs) swaying due to wind, whereby a beam formed wireless backhaul link could suffer, may be addressed by rotation estimation. AP rotation may be estimated using orientation sensors and any beam mismatch may be realigned with triggered/periodic beam training. In the realignment phase, the starting point of beam search may be shifted according to the sensor-based rotation estimate.

In contrast to these two examples, in the approaches described in the following, rotation estimation may be based on past beam selections (in contrast to measurements by rotation sensors). This provides an economical alternative to a sensor-based approach which requires extra hardware and tight timing budget for sensor information processing. Further, the beam refinement according to the approaches described in the following may not solely rely on beam training and may actively adapt beam directions between trainings according to the rotation estimate. This can provide an advantage in the wide range of communication systems (e.g. 5G) where the scheduled beam training interval may be longer than the time for rotation-induced beam drift to become significant and where device-triggered training is not supported.

UE rotation may be quantified as the direction and speed of antenna array (e.g. corresponding to directional antenna 204) orientation change, or equivalently, as the shift of the antenna array orientation in azimuth and elevation. Specifically, the estimate may be given as relative angular shifts in azimuth and elevation axes, or it may also be given as the angle and hypotenuse formed by the azimuth and elevation shifts, where the angle corresponds to the direction and the hypotenuse length corresponds to the speed of the rotation.

Unlike a base station 101, a mobile device 109 can face any direction, thus the notion of azimuth and elevation is purely relative to an arbitrary reference orientation of the mobile device 109. This is especially true for handheld devices, where it is preferable to support similar beamforming capabilities, e.g. beam-width and gain, over all three-dimensional directions. Nevertheless, this notion (azimuth and elevation) is useful for describing beamforming methods and is used herein for convenience.

Since a mobile device casing and its antenna array are typically fixed in relation to each other, an antenna array orientation may also be viewed as a device orientation. In addition, the change of this antenna array orientation is equivalent to the change of a given fixed beam direction at the mobile device (e.g. UE) in a relative sense. This rotation estimate may be based on sensor information or based on beam history.

In the beam history based approach for rotation estimation, the estimate may for example be a weighted average of two or more beams that the UE had selected in the previous beam selection opportunities.

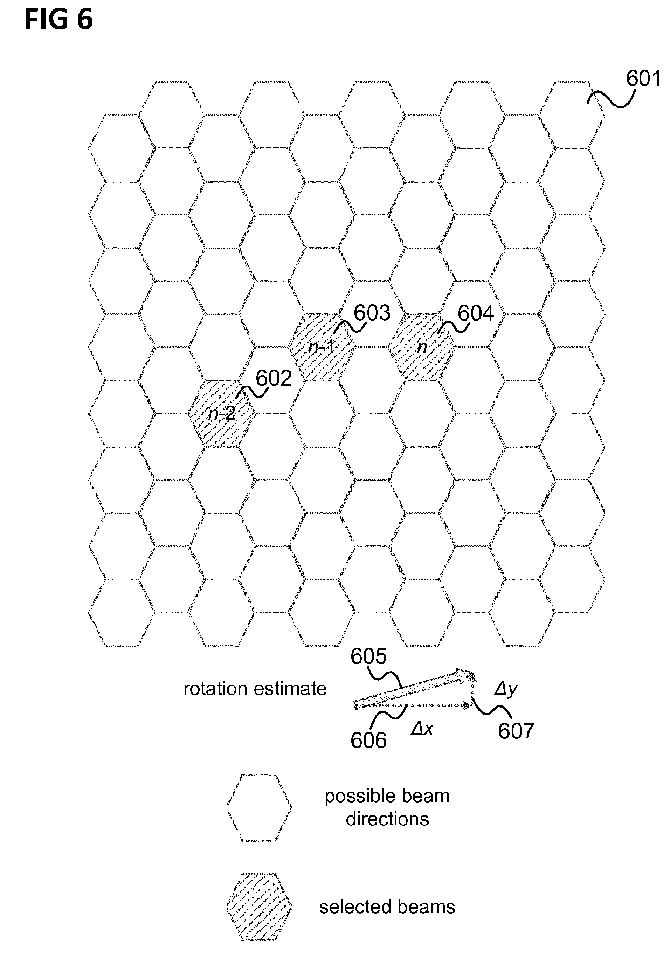

Figure 6 shows an example of the beam-history-based UE rotation estimation.

Each hexagon 601 represents a distinct beam direction that the UE antenna array can form, and the total set of hexagons represents a projection of all possible three-dimensional beam directions onto a two-dimensional plane. For convenience, the horizontal axis (x-axis) is denoted as azimuth and the vertical axis (y-axis) as elevation. Hatched hexagons 602, 603, 604 with indices denote selected beams that are used to deduce the rotation estimate. For instance, a hexagon 603 with index $n - 1$ denotes the beam selected at the $(n - 1)$-th beam-selection opportunity.

Arrows 605, 606, 607 at the bottom graphically represent the rotation estimate, which can be interpreted in two ways. In a first interpretation (thick arrow 605), the angle of the arrow 605 corresponds to the rotation direction and the length of the arrow 605 corresponds to the rotation speed. Equivalently, of two thinner dashed arrows 606, 607, the length of the horizontal arrow 606 denoted as $\Delta x$ corresponds to the rotation angle in azimuth and the length of the vertical arrow 607 denoted as $\Delta y$ corresponds to the rotation angle in elevation.

For example, according to one approach of beam-history-based UE rotation estimation, the UE (e.g. a corresponding antenna controller, e.g. part of a transceiver of the UE) solves the following set of weighted average equations for determining the amount of rotation in azimuth and elevation:

$$\Delta x[n] = \begin{cases} (1 - \alpha)\Delta x[n-1] + \alpha \cdot (x[n] - x[n-1]), & n \geq 2 \\ x[n] - x[n-1] & n = 1, \\ 0 & n = 0 \end{cases}$$

$$\Delta y[n] = \begin{cases} (1 - \alpha)\Delta y[n-1] + \alpha \cdot (y[n] - y[n-1]), & n \geq 2 \\ y[n] - y[n-1] & n = 1, \\ 0 & n = 0 \end{cases}$$

where $x[n]$ and $y[n]$ denote azimuth and elevation angles of the selected beam at $n$-th instance, respectively, $\Delta x[n]$ and $\Delta y[n]$ denote the rotation angle in azimuth and elevation, respectively, and $\alpha$, $0 < \alpha \leq 1$, is the averaging coefficient that controls the amount of weight given to older beam direction selections. In this example, the estimation starts as soon as two beam selections become available, and it is initialized with a simple difference between the first two selections. The set of $\Delta x[n]$ and $\Delta y[n]$ forms a vector equivalent to the thick arrow 605.

The 1-tap IIR (infinite impulse response) filter given above for rotation estimation is an example. Further embodiments of rotation estimation may use a variety of filtering methods on beam history, such as moving average filter or state-space descriptions (Kalman Filter).

One generalization of the rotation estimation described above is to use the history of multiple beams, in the case that the UE supports multiple simultaneous beams for multiple-input multiple-output (MIMO) communication, where each of the simultaneous UE beams may be uniquely identified and be associated with a directional antenna, e.g., a phased antenna array. For instance, one set of rotation estimates may be formed with each UE beam, and then a final rotation estimate may be formed via a weighted-average of the per-beam azimuth rotation estimates and a weighted-average of the per-beam elevation rotation estimates. The weights for the averaging may be constant if each of the multiple simultaneous beams has similar beam quality (e.g. beam width and gain) and can be directed to any desired direction. Alternatively, the weights may be different for each UE beam and/or for azimuth and elevation (they may even be zero for particular azimuth or elevation component of some UE beams) if each beam has different beam quality and/or can only be directed to a limited range of angles. Such a variable weighting is particularly relevant if, for instance, some of the antenna arrays have highly restricted ranges of beam directions in either azimuth or elevation and/or have coarse angular granularity, as may be the case for the arrays facing the thin sides in a small form-factor hand-held device, e.g.,

a smartphone.

The mobile device can use the rotation estimates obtained via either a beam-history-based or sensor-aided estimation approach to refine the set of beam candidates considered for the next beamforming instance. In particular, two refinement approaches are described in the following.

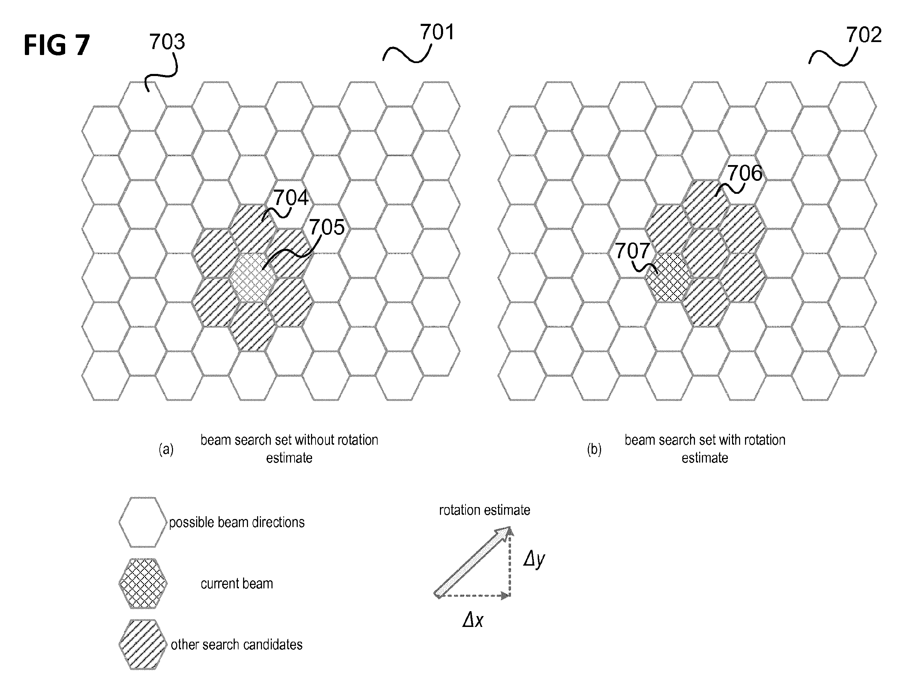

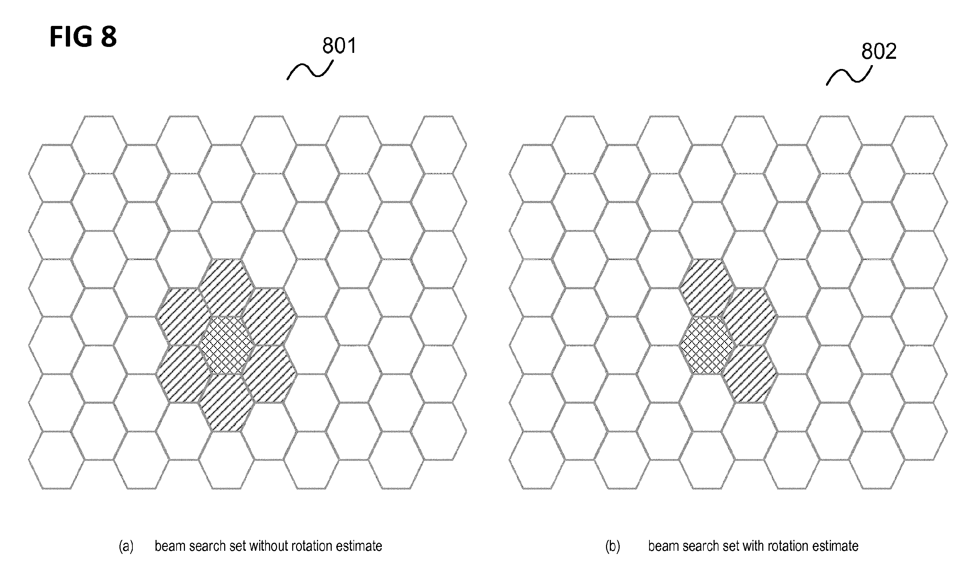

The first approach is to adjust the search set of beam candidates and is illustrated in figures 7 and 8. The mobile device (UE) may for example use this approach in a beamforming communication system that provides beam training mechanisms whereby the UE may try multiple beams and select one according to an optimization criterion. With rotation angle estimates $\Delta x[n]$ and $\Delta y[n]$, the set of beam candidates to be tried in the next beam training opportunity may be shifted by $\{\kappa \cdot \Delta x[n], \kappa \cdot \Delta y[n]\}$, where $\kappa$ is a scaling constant that accounts for any difference in time scale (e.g. observation periodicity) of rotation estimate and beamforming instances. The constant $\kappa$ may also act as a damping factor so that the adjusted search set does not shift too much in a single adjustment and/or includes the most recently used beam.

Figure 7 shows an example beam search set refinement based on a rotation estimate $\{\Delta x[n], \Delta y[n]\}$. As in figure 6 each hexagon 703 represents a distinct beam direction, and the total set of hexagons in a first representation 701 and the total set of hexagons in a second representation 702 each represent a two-dimensional projection of all beam directions. Diagonally hatched hexagons 704, 706 and the cross-hatched hexagon 705, 707 together form, in both representations 701, 702, a set of candidate beams (or, equivalently, candidate beam directions) to search over at a beam training instance (i.e. a beam search set of beam directions among which the UE searches during a beam search procedure), where the cross-hatched hexagon 705, 707 corresponding to a current or most recently selected beam direction. The first representation 701 illustrates a beam search set without refinement based on a rotation estimate, and the second representation 702 represents the beam search set after applying a refinement based on a rotation estimate, given by the azimuth angle difference $\Delta x$ and the elevation angle difference $\Delta y$. As figure 7 illustrates, a refined beam search set 706, 707 may be a shifted version of the initial beam search set 704, 705, shifted by $\{\kappa \cdot \Delta x[n], \kappa \cdot \Delta y[n]\}$, with a damping factor $\kappa$ so that the current beam is included in the refined beam search set. Optionally, the shift amount may be quantized as in the example of figure 7 if the communication system specification or the UE implementation necessitates a finite number of fixed beam directions.

Figure 8 shows another way of refining the beam search set based on the rotation estimate given in figure 7.

Similarly to figure 7, a first representation 801 illustrates a beam search set without refinement based on a rotation estimate, and a second representation 802 represents the set after applying a refinement based on a rotation estimate.

In this example, the initial search set is reduced by keeping the candidates in the general direction of the rotation and removing the others. Unlike the previous example of figure 7, where the aim of the refinement is higher accuracy of the final selected beam, the aim here is more efficient beam search and reduced cost.

The second approach of beam refinement is preemptive beam adjustment of a set of beams. This approach may for example be used for setting the beam direction when there is no beam search opportunity, e.g. in between two consecutive transmission of reference signals by a base station, i.e. in between two beam search procedures. Such scenarios may arise if the communication system supports beamforming for data transmission and reception between two reference signal occurrences for beam training. Without rotation estimates, the beams trained with a reference signal would typically be used until the next reference signal is received, e.g. used for all beamforming instances until the next beam training procedure execution. Aided by a rotation estimate, the UE may gradually shift the beams in between two reference signal occurrences (i.e. beam training procedure occurrences) in the direction of UE rotation. Such gradual shift may be a hard hand-off from one quantized direction to another, or it may be a soft handover. The latter may be achieved by steering a beam from the default quantized directions, such that its direction may lie between adjacent quantized directions. It may also be achieved by activating two or more simultaneous beams (e.g. using two directional antennas or, alternatively, covering two beam directions by means of a higher beam width), where one is directed to an initial quantized direction and others are directed to adjacent quantized directions toward a target direction.

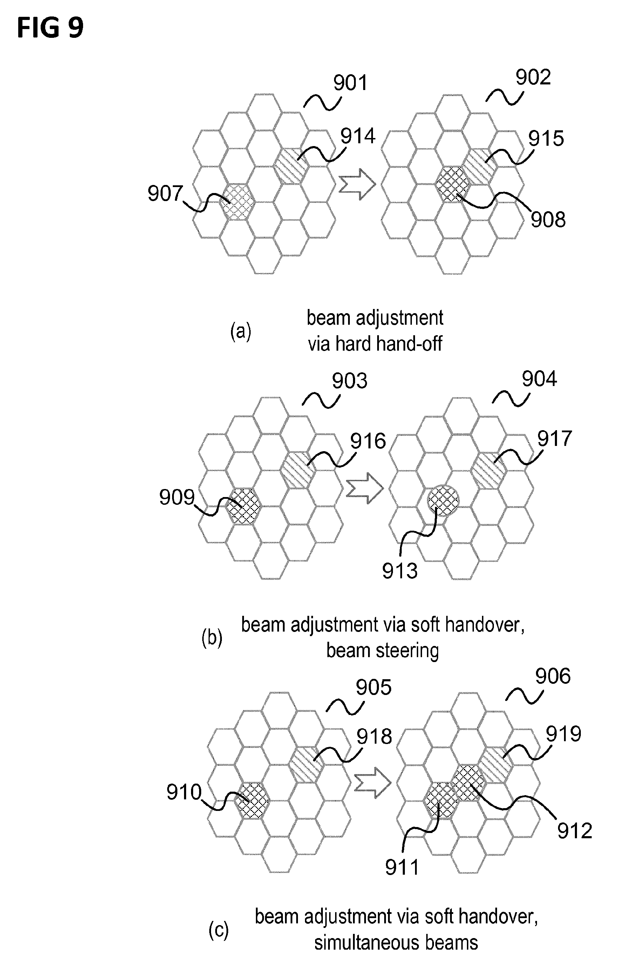

Figure 9 shows three examples of a preemptive beam adjustment method.

From left to right, six representations 901 to 906 of beam directions by means of hexagons, similarly to figures 6 to 8, are shown, wherein each representation 901 to 906 represents a projection of possible three-dimensional beam directions onto a two-dimensional plane.

In each example, the respective left representation 901, 903, 905 corresponds to the beam selection result after a beam training procedure, and the respective right representation 902, 904, 906 corresponds to a beamforming instance (i.e. an instance of setting a beam direction) after the beam training procedure but before the next beam training procedure. A cross-hatched hexagon 907 to 912 or circle 913 represents the respective selected beam, and a dash-filled hexagon 914 to 919 represents the predicted beam direction at the next beam training.

The first example, corresponding to the first two representations 901, 902, shows a hard hand-off from a first beam 907 to a second beam 908, the second example, corresponding to the second two representations 903, 904 shows a soft handover via beam steering from a first beam 909 to a second beam 913, and the third example, corresponding to the third two representations 905, 906 shows a soft handover with two simultaneous beams 911, 912.

Another potential application for preemptive beam adjustment is using the selected receive (Rx) beam (e.g. determined based on a rotation estimate) for the next transmit (Tx) beam or vice versa, in a communication system that provides beam training for only one of the communication directions.

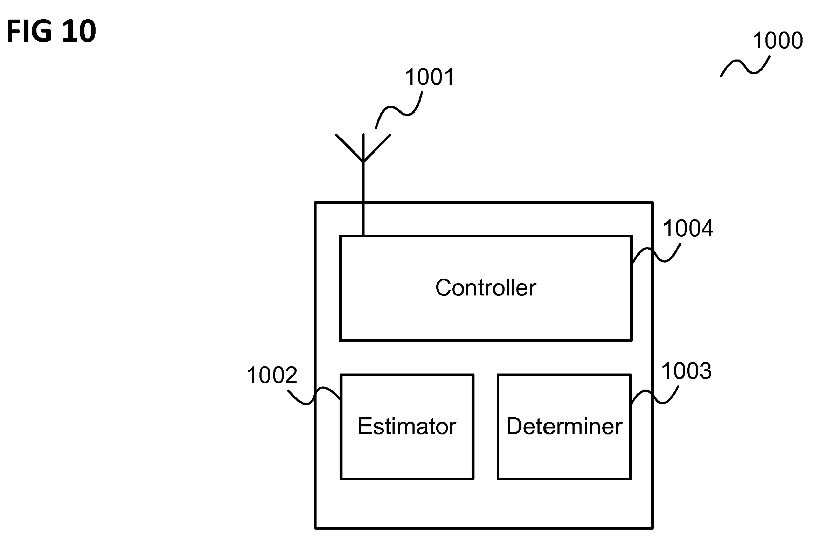

In summary, according to various examples, a communication terminal is provided as illustrated in figure 10.

Figure 10 shows a mobile communication device 1000.

The mobile communication device 1000 includes an antenna 1001 which may be set to one of a plurality of main beam directions (e.g. a directional antenna).

Further, the mobile communication device 1000 includes an estimator 1002 configured to estimate a direction and a speed of a rotational change of the antenna 1001 (in other words a change of an orientation of the antenna 1001), a determiner 1003 configured to adjust at least one reference main beam direction by an amount based on the estimated direction and speed to determine at least one candidate main beam direction of the plurality of main beam directions and a controller 1004 configured to set the antenna to a direction (e.g. in terms of a main beam direction) based on the at least one candidate main beam direction.

According to various examples, in other words, a mobile communication device, e.g. a mobile communication terminal (such as a handheld electronic device, e.g. a mobile phone, e.g. a subscriber terminal of a cellular mobile communication network) estimates the speed and direction of its rotation and adapts one or more candidate beam directions based on which it selects or searches a beam direction to be used based on the estimated rotation strength. This may include an adaptation of a set of candidate beam directions for a beam search procedure or a beam direction to be set in between two beam search procedure occurrences. For example, one of the reference main beam directions may be a current main beam direction currently used by the mobile communication device for communication.

The mobile communication device may not only be a communication terminal but may also be a communication device which has, for example, base station functionality.

The one or more candidate beam directions may be a plurality of candidate beam directions of a search set (i.e. in this case "the one or more candidate beam directions" correspond to more than one candidate beam directions), i.e. a set of main beam directions among which the mobile communication device searches for a following main beam direction, e.g. based on the reception of a reference signal. The one or more candidate beam directions may also be a single main beam direction to which the mobile communication device sets the antenna (e.g. before the next search).

The approach of figure 10 may for example allow efficient and accurate beamforming at a mobile device in a wireless communication system. In particular, it allows addressing fast device rotation and its impact on beamforming performance.

It should be noted that beamforming at a mobile communication device, or user equipment (UE), is an emerging technique that is especially relevant with EHF (extremely high frequency, a.k.a. millimeter wave) communication technologies such as 5G and WiGig. This is because the high link attenuation of EHF necessitates compensation techniques such as beamforming, not only at base stations but also at UEs. On the other hand, the short wavelength in EHF bands allows the implementation of economical and small antenna arrays with high beamforming gain.

The components of the mobile communication device (e.g. the estimator, the determiner and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

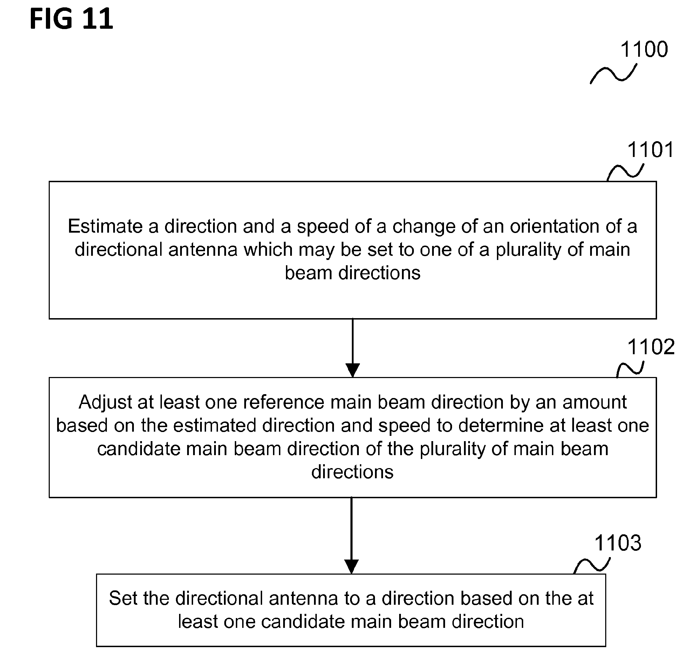

The mobile communication device 1000 for example carries out a method as illustrated in figure 11.

Figure 11 shows a flow diagram 1100 illustrating a method for selecting a beam direction for an antenna (e.g. for controlling or adjusting a beam direction), for example carried out by a communication device. It should be noted that the selection of a beam direction may be seen to be equivalent to the selection of a beam, at least where the beam width is fixed.

In 1101, the communication device estimates a direction and a speed of a rotational change of an antenna which may be set to one of a plurality of main beam directions.

In 1102, the communication device adjusts at least one reference main beam direction by an amount based on the estimated direction and speed to determine at least one candidate main beam direction of the plurality of main beam directions .

In 1103, the communication device sets the antenna to a direction based on the at least one candidate main beam direction.

The following examples pertain to further embodiments.

Example 1 is a mobile communication device as illustrated in figure 10.

In Example 2, the subject-matter of Example 1 may optionally include a transceiver coupled to the antenna and configured to maintain a communication link to a radio base station.

In Example 3, the subject-matter of Example 2 may optionally include the controller being configured to control the communication between the transceiver and the radio base station while the antenna is set to the direction based on the at least one candidate main beam direction.

In Example 4, the subject-matter of any one of Examples 1-3 may optionally include the at least one reference main beam direction comprising a current main beam direction of the antenna to which the antenna is currently set.

In Example 5, the subject-matter of Example 4 may optionally include the controller being configured to switch the antenna from a current main beam direction of the antenna, to which the antenna is currently set, to the main beam direction which being based on the at least one candidate main beam direction.

In Example 6, the subject-matter of any one of Examples 1-5 may optionally include the at least one reference main beam direction comprising a main beam direction of the antenna obtained by a beam search procedure based on a reference signal transmitted by a base station.

In Example 7, the subject-matter of any one of Examples 1-6 may optionally include the controller being configured to set the antenna to the main beam direction at a time that depends on the estimated change of orientation of the antenna.

In Example 8, the subject-matter of any one of Examples 1-7 may optionally include the communication link being a radio access link.

In Example 9, the subject-matter of any one of Examples 1-8 may optionally include the at least one reference main beam direction being a set of search candidate beam directions around a current main beam direction.

In Example 10, the subject-matter of Example 9 may optionally include the controller being configured to search a main beam direction of the set of search candidate beam directions and to set the antenna to the main beam direction obtained by the search.

In Example 11, the subject-matter of any one of Examples 1-10 may optionally include the antenna being an antenna array.

In Example 12, the subject-matter of any one of Examples 1-11 may optionally include the estimator being configured to estimate the direction and the speed of the change of the orientation of the antenna based on a set of main beam directions to which the controller has set the antenna.

In Example 13, the subject-matter of Example 12 may optionally include the set of main beam directions being a history of main beam directions comprising two or more main beam directions to which the controller has previously set the antenna.

In Example 14, the subject-matter of any one of Examples 12-13 may optionally include the set of main beam directions comprising a main beam direction to which the antenna is currently set.

In Example 15, the subject-matter of any one of Examples 1-14 may optionally include the controller being configured to perform a beam search procedure based on a reference signal transmitted by a base station with a predetermined periodicity and set the antenna to a direction based on a result of the beam search procedure and the estimator being configured to estimate the direction and the speed of the change of the orientation of the antenna, the determiner being configured to determine the at least one candidate main beam direction of the plurality of main beam directions and

the controller being configured to set the antenna to the direction based on the at least one candidate main beam direction after the controller has performed a last beam search procedure and before it performs the next beam search procedure.

In Example 16, the subject-matter of Example 15 may optionally include the at least one reference man beam direction comprising a main beam direction based on a result of the last beam search procedure.

In Example 17, the subject-matter of any one of Examples 1-16 may optionally include a transmitter configured to transmit a message to a base station indicating that the mobile communication device is capable of estimating direction and speed of a rotational change of the antenna.

In Example 18, the subject-matter of any one of Examples 1-17 may optionally further include a sensor configured to measure at least one of a rotation speed, a rotation acceleration and an orientation of the antenna and the estimator being configured to estimate the direction and the speed of a change of the orientation of the antenna based on a measurement by the sensor.

Example 19 is a base station configured to receive a message from a mobile communication terminal indicating that the mobile communication terminal is capable of estimating direction and speed of a rotational change of its antenna and configured to transmit beam training reference signals to the mobile communication terminal based on the indication.

In Example 20, the subject matter of Example 19 may optionally include the base station being configured to set at least one of a time-frequency density and a periodicity of the transmission of the beam training reference signals based on the indication.

Example 21 is a method for selecting a beam direction for an antenna as illustrated in figure 11.

In Example 22, the subject-matter of any one of Examples 21- may optionally include maintaining a communication link to a radio base station by means of the antenna.

In Example 23, the subject-matter of any one of Examples 22- may optionally include controlling the transceiver to perform communication using the antenna set to the direction based on the at least one candidate main beam direction.

In Example 24, the subject-matter of any one of Examples 21-23 may optionally include the at least one reference main beam direction comprising a current main beam direction of the antenna to which the antenna is currently set.

In Example 25, the subject-matter of Example 24 may optionally include switching the antenna from a current main beam direction of the antenna, to which the antenna is currently set, to the main beam direction which being based on the at least one candidate main beam direction.

In Example 26, the subject-matter of any one of Examples 21-25 may optionally include the at least one reference main beam direction comprising a main beam direction of the antenna obtained by a beam search procedure based on a reference signal transmitted by a base station.

In Example 27, the subject-matter of any one of Examples 21-26 may optionally include setting the antenna to the direction at a time that depends on the estimated change of orientation of the antenna.

In Example 28, the subject-matter of any one of Examples 21-27 may optionally include the communication link being a radio access link.

In Example 29, the subject-matter of any one of Examples 21-28 may optionally include the at least one reference main beam direction being a set of search candidate beam directions around a current main beam direction.

In Example 30, the subject-matter of Example 29 may optionally include searching a main beam direction of the set of search candidate beam directions and setting the antenna to the main beam direction obtained by the search.

In Example 31, the subject-matter of any one of Examples 21-30 may optionally include the antenna being an antenna array.

In Example 32, the subject-matter of any one of Examples 21-31 may optionally include estimating the direction and the speed of the change of the orientation of the antenna based on a set of main beam directions to which the antenna has been set.

In Example 33, the subject-matter of any one of Examples 22-32 may optionally include the set of main beam directions being a history of main beam directions comprising two or more main beam directions to which the antenna has previously been set.

In Example 34, the subject-matter of any one of Examples 22-33 may optionally include the set of main beam directions comprising a main beam direction to which the antenna is currently set.

In Example 35, the subject-matter of any one of Examples 21-34 may optionally include performing a beam search procedure based on a reference signal transmitted by a base station with a predetermined periodicity and setting the antenna to a direction based on a result of the beam search procedure, estimating the direction and the speed of the change of the orientation of the antenna, determining the at least one candidate main beam direction of the plurality of main beam directions and setting the antenna to the direction based on the at least one candidate main beam direction after performing a last beam search procedure and before performing the next beam search procedure.

In Example 36, the subject-matter of Example 35 may optionally include the at least one reference man beam direction comprising a main beam direction based on a result of the last beam search procedure.

In Example 37, the subject-matter of any one of Examples 21-36 may optionally include transmitting a message to a base station indicating the capability of estimating direction and speed of a rotational change of the antenna.

In Example 38, the subject-matter of any one of Examples 21-37 may optionally include measuring at least one of a rotation speed, a rotation acceleration and an orientation of the antenna by means of a sensor and estimating the direction and the speed of a change of the orientation of the antenna based on a measurement by the sensor.

Example 39 is a method for transmitting beam training reference signals comprising receiving a message from a mobile communication terminal indicating that the mobile communication terminal is capable of estimating direction and speed of a rotational change of its antenna and configured to transmit beam training reference signals to the mobile communication terminal based on the indication.

In Example 40, the subject-matter of Example 39 may optionally include setting at least one of a time-frequency density and a periodicity of the transmission of the beam training reference signals based on the indication.

According to further examples, a method for determining a transmission direction or a reception direction for a communication at a mobile device of a radio communications network is provided comprising estimating a rotation of the orientation of the mobile device and adjusting one or more beam directions (i.e. direction of one or more transmission beams or reception beams or both) based on the rotation estimate.

The estimate of a rotation of the orientation of the mobile device may for example comprise an angular shift in azimuth and an angular shift in elevation and may include an estimate of the speed of rotation.

The estimate of a rotation of the orientation of the mobile device is for example an output of a filter function processing at least two beam (transmission/reception) directions taken at different times.

The adjustment of beam (transmission/reception) directions is for example a scaled and a quantized shift of the target set of beam (transmission/reception) directions, where the shift is the rotation angle estimate of the orientation of the mobile device.

The adjustment of beam (transmission/reception) directions is for example a reduced subset of the target set of beam (transmission/reception) directions, whereby the subset comprises the candidate directions that are within certain angular offset from one or both of the azimuth angular shift and elevation angular shift of the rotation estimate.

According to a further example, a system and a method for determining the time-frequency density and periodicity of reference signals for beam training in a radio communications network is provided comprising indicating, by a mobile device, its capability of device rotation estimation and determining, by the base station, the time-frequency density and periodicity of the beam-training reference signals based on the indication. Time-frequency density means the density of reference signals in the time-frequency grid (or in time- and frequency-axis), i.e., in other words, time-frequency positions of reference signals.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1. A mobile communication device comprising an antenna adapted for setting to one of a plurality of main beam directions, the mobile communication device comprising:

   an estimator configured to estimate a direction and a speed of a rotational change of the antenna;
   a determiner configured to adjust at least one reference main beam direction based on the estimated direction and speed to determine at least one candidate main beam direction of the plurality of main beam directions;
   a controller configured to set the antenna to a direction based on the at least one candidate main beam direction.

2. The mobile communication device of claim 1, comprising a transceiver coupled to the antenna and configured to maintain a communication link to a radio base station.

3. The mobile communication device of claim 2, wherein the controller is configured to control the communication between the transceiver and the radio base station while the antenna is set to the direction based on the at least one candidate main beam direction.

4. The mobile communication device of any one of claims 1 to 3, wherein the at least one reference main beam direction comprises a current main beam direction of the antenna to which the antenna is currently set.

5. The mobile communication device of claim 4, wherein the controller is configured to switch the antenna from a current main beam direction of the antenna, to which the antenna is currently set, to the main beam direction which is based on the at least one candidate main beam direction.

6. The mobile communication device of any one of claims 1 to 5, wherein the at least one reference main beam direction comprises a main beam direction of the antenna obtained by a beam search procedure based on a reference signal transmitted by a base station.

7. The mobile communication device of any one of claims 1 to 6, wherein the controller is configured to set the antenna to the main beam direction at a time that depends on the estimated change of orientation of the antenna.

8. The mobile communication device of any one of claims 1 to 7, wherein the communication link is a radio access link.

9. The mobile communication device of any one of claims 1 to 8, wherein the at least one reference main beam direction is a set of search candidate beam directions around a current main beam direction.

10. The mobile communication device of claim 9, wherein the controller is configured to search a main beam direction of the set of search candidate beam directions and to set the antenna to the main beam direction obtained by the search.

11. The mobile communication device of any one of claims 1 to 10, wherein the antenna is an antenna array.

**12.** The mobile communication device of any one of claims 1 to 11, wherein the estimator is configured to estimate the direction and the speed of the change of the orientation of the antenna based on a set of main beam directions to which the controller has set the antenna.

**13.** A base station configured to receive a message from a mobile communication terminal indicating that the mobile communication terminal is capable of estimating direction and speed of a rotational change of its antenna and configured to transmit beam training reference signals to the mobile communication terminal based on the indication.

**14.** A method for selecting a beam direction for an antenna comprising:

estimating a direction and a speed of a rotational change of an antenna which may be set to one of a plurality of main beam directions;
adjusting at least one reference main beam direction by an amount based on the estimated direction and speed to determine at least one candidate main beam direction of the plurality of main beam directions;
setting the antenna to a direction based on the at least one candidate main beam direction.

**15.** A method for transmitting beam training reference signals comprising:

receiving a message from a mobile communication terminal indicating that the mobile communication terminal is capable of estimating direction and speed of a rotational change of its antenna and configured to transmit beam training reference signals to the mobile communication terminal based on the indication.

**Amended claims in accordance with Rule 137(2) EPC.**

**1.** A mobile communication device comprising a directional antenna adapted for setting to one of a plurality of beam directions, the mobile communication device comprising:

an estimator configured to estimate a direction and a speed of a rotational change of the directional antenna;
a determiner configured to determine a set of candidate beam directions around a current beam direction, and refine the set of candidate beam directions using the estimated rotational change of the directional antenna; and
a controller configured to perform a beamforming training on the refined set of candidate beam directions, and to set the directional antenna to one of the candidate beam directions in the refined set of candidate beam directions based on the beamforming training.

**2.** The mobile communication device of claim 1, comprising a transceiver coupled to the directional antenna and configured to maintain a communication link to a radio base station.

**3.** The mobile communication device of claim 2, wherein the controller is configured to control the communication between the transceiver and the radio base station while the directional antenna is set to the direction based on the at least one candidate beam direction.

**4.** The mobile communication device of any one of claims 1 to 3, wherein the at least one candidate beam direction comprises a beam direction of the directional antenna obtained by a beam search procedure based on a reference signal transmitted by a base station.

**5.** The mobile communication device of any one of claims 1 to 4, wherein the controller is configured to set the directional antenna to one of the candidate beam directions at a time that depends on the estimated change of orientation of the directional antenna.

**6.** The mobile communication device of any one of claims 2 to 5, wherein the communication link is a radio access link.

**7.** The mobile communication device of claim 6, wherein the controller is configured to search a beam direction of the set of candidate beam directions and to set the directional antenna to the beam direction obtained by the search.

**8.** The mobile communication device of any one of claims 1 to 7, wherein the directional antenna is a directional antenna array.

9. The mobile communication device of any one of claims 1 to 8, wherein the estimator is configured to estimate the direction and the speed of the change of the orientation of the directional antenna based on a set of beam directions to which the controller has set the directional antenna.

10. The mobile communication device of any one of claims 1 to 9, wherein the refined set of candidate beam directions is a shifted version of the set of candidate beam directions and includes the current beam direction.

11. The mobile communication device of any one of claims 1 to 9, wherein the refined set of candidate beam directions is a reduced version of the set of candidate beam directions such that candidate beam directions in a general direction of the rotational change of the directional antenna are maintained and at least one candidate beam not in the general direction of the rotational change of the directional antenna is removed.

12. A base station configured to receive a message from a mobile communication terminal indicating that the mobile communication terminal is capable of estimating direction and speed of a rotational change of its directional antenna and configured to transmit beam training reference signals to the mobile communication terminal based on the indication.

13. A method for selecting a beam direction for a directional antenna comprising:

estimating a direction and a speed of a rotational change of a directional antenna;
determining a set of candidate beam directions around a current beam direction;
refining the set of candidate beam directions using the estimated rotational change of the directional antenna;
performing a beamforming training on the refined set of candidate beam directions;
and setting the directional antenna to one of the candidate beam directions in the refined set of candidate beam directions based on the beamforming training.

14. A method for transmitting beam training reference signals comprising:

receiving a message from a mobile communication terminal indicating that the mobile communication terminal is capable of estimating direction and speed of a rotational change of its directional antenna and configured to transmit beam training reference signals to the mobile communication terminal based on the indication.

FIG 1

FIG 2

EP 3 293 890 A1

# FIG 3

STA1's transmit weigh vector

STA2's receive weigh vector

Phase shifter

Transmit chain

RF Channel

Receive chain

300
301
302
303
304
305
306
307
308
309
310
311

$M_t$

$N_t$

EP 3 293 890 A1

**FIG 4**

402

10 m

base station

403

0.83 m

4.78°

UE

10 m

401

EP 3 293 890 A1

# FIG 5

501

503

selected beam direction

best propagation path

504

UE

a candidate beam direction

90° UE rotation in 0.1 second

502

beam used 0.1 second ago

504

505

best propagation path

UE

# FIG 6

rotation estimate

possible beam directions

selected beams

**FIG 7**

703 ~~701~~ ~~702~~

704
705

706
707

(a) beam search set without rotation estimate

(b) beam search set with rotation estimate

possible beam directions

current beam

other search candidates

rotation estimate

$\Delta y$

$\Delta x$

EP 3 293 890 A1

FIG 8

801

802

(a) beam search set without rotation estimate

(b) beam search set with rotation estimate

# FIG 9

(a) beam adjustment via hard hand-off

(b) beam adjustment via soft handover, beam steering

(c) beam adjustment via soft handover, simultaneous beams

**FIG 10**

1000

EP 3 293 890 A1

# FIG 11

1100

1101

Estimate a direction and a speed of a change of an orientation of a directional antenna which may be set to one of a plurality of main beam directions

1102

Adjust at least one reference main beam direction by an amount based on the estimated direction and speed to determine at least one candidate main beam direction of the plurality of main beam directions

1103

Set the directional antenna to a direction based on the at least one candidate main beam direction

Europäisches
Patentamt

European
Patent Office

Office européen
des brevets

# EUROPEAN SEARCH REPORT

Application Number

EP 16 18 8358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/017836 A1 (CHANG YOUNG-BIN [KR] ET AL) 17 January 2013 (2013-01-17) <br> * page 1, paragraph 2 * <br> * page 3, paragraph 44 * <br> * page 3, paragraph 39 - paragraph 40 * <br> * page 4, paragraph 56 - paragraph 57 * <br> * page 5, paragraph 55 * <br> * page 6, paragraph 78 - paragraph 80 * <br> * page 9, paragraph 104 * <br> * page 9, paragraph 111 * <br> * figures 3,5,9,12,14 * <br> ----- | 1-15 | INV. <br> H04B7/08 <br><br> ADD. <br> H04B7/04 |
| X <br><br> A | US 2015/264583 A1 (SUNDSTRÖM LARS [SE] ET AL) 17 September 2015 (2015-09-17) <br> * page 2, paragraph 21 * <br> * page 2, paragraph 24 * <br> * page 3, paragraph 26 * <br> * page 3, paragraph 35 * <br> * page 6, paragraph 84 * <br> * page 6, paragraph 90 * <br> * page 8, paragraph 139 * <br> * figure 2 * <br> ----- | 1-5,8, 11,12,14 <br> 6,7,9, 10,13,15 | |

TECHNICAL FIELDS
SEARCHED (IPC)

H04B

The present search report has been drawn up for all claims

| Place of search | Date of completion of the search | Examiner |
|---|---|---|
| Munich | 25 January 2017 | Franz, Stefan |

EPO FORM 1503 03.82 (P04C01)

EP 3 293 890 A1

## ANNEX TO THE EUROPEAN SEARCH REPORT
## ON EUROPEAN PATENT APPLICATION NO.

EP 16 18 8358

25-01-2017

| Patent document cited in search report | | | Publication date | Patent family member(s) | | | Publication date |
|---|---|---|---|---|---|---|---|
| US 2013017836 | A1 | | 17-01-2013 | AU | 2012284745 | A1 | 23-01-2014 |
| | | | | CA | 2841973 | A1 | 24-01-2013 |
| | | | | CN | 103814529 | A | 21-05-2014 |
| | | | | EP | 2732562 | A2 | 21-05-2014 |
| | | | | JP | 2014525191 | A | 25-09-2014 |
| | | | | KR | 20130009314 | A | 23-01-2013 |
| | | | | US | 2013017836 | A1 | 17-01-2013 |
| | | | | WO | 2013012185 | A2 | 24-01-2013 |
| US 2015264583 | A1 | | 17-09-2015 | EP | 3117532 | A1 | 18-01-2017 |
| | | | | US | 2015264583 | A1 | 17-09-2015 |
| | | | | WO | 2015135987 | A1 | 17-09-2015 |

EPO FORM P0459

For more details about this annex : see Official Journal of the European Patent Office, No. 12/82